# EUROPÄISCHE PATENTSCHRIFT

(11) **EP 3 348 846 B1**
(45) Veröffentlichungstag und Bekanntmachung des Hinweises auf die Patenterteilung: **13.11.2019**
(21) Anmeldenummer: 18150629.6
(22) Anmeldetag: 08.01.2018
(51) Int. Cl.: E04F 13/14, F16B 13/06, F16B 13/08, E04F 13/08

(54) **SPREIZANKER FÜR DÜNNE PLATTEN**
SPREADING ANCHOR FOR THIN PLATES
ÉLÉMENT D'ANCRAGE À EXPANSION POUR PLAQUES MINCES

(30) Priorität: 17.01.2017 DE 102017100841; 14.09.2017 DE 102017121305
(43) Veröffentlichungstag der Anmeldung: 18.07.2018
(73) Patentinhaber: fischerwerke GmbH & Co. KG, 72178 Waldachtal (DE)
(72) Erfinder: Breuer, Harald, 72270 Baiersbronn (DE)
(74) Vertreter: Suchy, Ulrich Johannes

(56) Entgegenhaltungen:
- DE-A1- 3 315 451
- DE-A1- 19 538 898

## Beschreibung

Die Erfindung betrifft einen Spreizanker mit den Merkmalen des Oberbegriffs des Anspruchs 1, der insbesondere zur Verankerung in dünnen Platten vorgesehen ist.

Ein Spreizanker zur Verankerung in dünnen Platten, nämlich Fassadenplatten beispielsweise aus Stein, ist bekannt aus der Europäischen Patentanmeldung EP 1 150 024 A1. Der bekannte Spreizanker wird in einem hinterschnittenen Sackloch verankert, das einen zylindrischen Abschnitt aufweist, der in eine konische Hinterschneidung an einem Grund des Sacklochs übergeht. Der bekannte Spreizanker weist die Form eines Zylinders auf, der in eine konische Aufweitung übergeht, und ist von einem koaxialen Durchgangsloch mit Innengewinde durchsetzt. In einer dünnen Platte ist eine verbleibende Dicke der Platte zwischen dem Grund des Sacklochs und einer gegenüberliegenden Außenseite der Platte gering. Es besteht die Gefahr, dass eine Schraube oder eine Gewindestange, die in das Innengewinde des Durchgangslochs des bekannten Spreizankers geschraubt wird, nicht nur ein- sondern durchgeschraubt wird, und am Grund des Sacklochs aufsitzt, in dem der Spreizanker verankert wird oder ist. Dabei kann die Schraube oder Gewindestange die Platte am Grund des Sacklochs durchstoßen.

Aufgabe der Erfindung ist, einen Spreizanker der vorstehenden erläuterten Art vorzuschlagen, der ein Durchstoßen eines Grundes eines Sacklochs, in dem er verankert wird oder ist, vermeidet.

Diese Aufgabe wird erfindungsgemäß durch die Merkmale des Anspruchs 1 gelöst. Der erfindungsgemäße Spreizanker weist ein Durchgangsloch mit einem Innengewinde auf. Das Durchgangsloch erstreckt sich in Längsrichtung in Richtung einer Längsachse und durchdringt den Spreizanker vollständig bis zu einem vorderen Ende. Das Innengewinde erstreckt sich erfindungsgemäß dagegen nicht bis zum vorderen Ende, sondern ein gewindefreier Abschnitt ist zwischen dem vorderen Ende und dem Innengewinde ausgebildet. Die Begriffe "vorn" und "hinten" beziehen sich auf eine Einbringrichtung, in die der Spreizanker planmäßig in ein Sackloch eingebracht wird. Während das Durchgangsloch somit von dem in Einbringrichtung hinteren Ende bis zu dem in der Einbringrichtung vorderen Ende durch den Spreizanker vollständig durchgeht, endet das Innengewinde erfindungsgemäß vor dem in Einbringrichtung vorderen Ende des Spreizankers, oder läuft vor dem vorderen Ende aus. Letzteres bedeutet, dass eine Höhe des Innengewindes bis auf Null abnimmt. Das nicht durchgehende Innengewinde verhindert, dass eine Schraube oder Gewindestange durch den Spreizkörper durchgeschraubt wird und am vorderen Ende austritt. Dadurch wird eine Beschädigung eines Grundes des Sacklochs vermieden.

Ein Durchmesser des gewindefreien Abschnitts des Durchgangslochs des erfindungsgemäßen Spreizankers ist erfindungsgemäß so groß, wie ein Innendurchmesser des Innengewindes. Der Durchmesser des Durchgangslochs im gewindefreien Abschnitt ist also ein Kerndurchmesser des Innengewindes. Insbesondere ist mit dem "Durchmesser des Durchgangslochs" der maximale Innendurchmesser des Durchgangslochs außerhalb des Innengewindes und im gewindefreien Abschnitt gemeint, wobei eventuelle Übergänge oder Fasen beziehungsweise Abrundungen unberücksichtigt bleiben. Das Durchgangsloch ist zylindrisch, abgesehen von einem Gewindegang des Innengewindes und eventuell Fasen an Mündungen weist das Durchgangsloch über seine gesamte Länge einen konstanten Durchmesser und Kreisquerschnitt auf.

Der erfindungsgemäße Spreizanker ist insbesondere zur Verankerung in einem hinterschnittenen Sackloch in einer dünnen Platte, beispielsweise einer Fassadenplatte aus Stein, vorgesehen. "Dünn" meint eine Platte, die nur einen Bruchteil einer Tiefe des hinterschnittenen Sacklochs dicker als das Sackloch tief ist. Wegen der geringen Restdicke der Platte am Grund des Sacklochs bestünde die Gefahr eines Durchstoßens, wenn der Spreizanker ein Durchschrauben und einen Austritt einer Schraube oder einer Gewindestange an einem vorderen, dem Grund des Sacklochs zugewandten Ende des Spreizankers zulassen würde, was das nicht durchgehende Innengewinde des erfindungsgemäßen Spreizankers verhindert. Der erfindungsgemäße Spreizanker ist allerdings ebenso in einem hinterschnittenen Sackloch in einer dicken Platte oder einem sonstigen Ankergrund verankerbar.

Zum Aufspreizen beispielsweise eines Spreizrings oder einer Spreizhülse weist der erfindungsgemäße Spreizanker an seinem vorderen Ende eine Aufweitung auf, in der sich der Spreizanker zumindest abschnittsweise in einer Längsrichtung, und zwar insbesondere in der Einbringrichtung in ein Sackloch, radial aufweitet. Insbesondere weitet sich der Spreizanker konisch auf, er kann sich allerdings auch keil- oder pyramidenförmig oder mit einer oder mehreren Stufen aufweiten. Die Aufzählung dient der Veranschaulichung und ist nicht abschließend. Ein Spreizring oder eine Spreizhülse lässt sich durch Aufschieben auf die Aufweitung des Spreizankers oder Einziehen der Aufweitung in den Spreizring oder die Spreizhülse aufweiten, was auch als Aufspreizen des Spreizrings, der Spreizhülse und/oder des Spreizankers aufgefasst werden kann. Zur Verankerung in dem hinterschnittenen Bohrloch wird der Spreizring oder die Spreizhülse in der Hinterschneidung aufgespreizt und hält, das heißt verankert, den Spreizanker durch Formschluss in der Hinterschneidung des Sacklochs.

Allgemein kann der Spreizring oder die Spreizhülse auch als Spreizelement aufgefasst werden, das in Längsrichtung des Durchgangslochs in Bezug zur Aufweitung verschiebbar ist. Ein Spreizring kann zum Aufspreizen wellenförmig sein. Das Aufspreizen erfolgt durch eine Relativbewegung des Spreizelements in Bezug auf die Aufweitung, nämlich durch ein Einziehen der Aufweitung in das Spreizelement oder durch ein Aufschieben des Spreizelements auf die Aufweitung, was gleichbedeutend ist.

Das Spreizelement ist ungeschlitzt. Weiterhin ist bevorzugt, dass der Spreizanker im Bereich der Aufweitung ungeschlitzt ist.

Die Erfindung wird nachfolgend anhand eines in der Zeichnung dargestellten Ausführungsbeispiels näher erläutert. Es zeigen:
- Figur 1: einen Achsschnitt eines erfindungsgemäßen Spreizankers in nicht aufgespreiztem Zustand;
- Figur 2: den Spreizanker aus Figur 1 in Ansicht; und
- Figur 3: den aufgespreizten und in einer dünnen Platte verankerten Spreizanker aus Figuren 1 und 2 in einem Halbschnitt.

Der in der Zeichnung dargestellte, erfindungsgemäße Spreizanker 1 weist einen zylindrischen Kragen 2 auf, an den sich einstückig eine konische Aufweitung 3 anschließt, in der sich der Spreizanker 1 radial aufweitet. Die Aufweitung 3 endet an einem vorderen Ende 4 und der Kragen 2 an einem hinteren Ende 5 des Spreizankers 1. Der Spreizanker 1 ist von einem zylindrischen und koaxialen Durchgangsloch 6 durchsetzt, das den Spreizanker 1 vollständig bis zu einem vorderen Ende 4 durchdringt beziehungsweise durchgeht und auf seiner gesamten Länge mit Ausnahme einer Fase 7 an einer Mündung des Durchgangslochs 6 am hinteren Ende 5 des Spreizankers 1 einen konstanten Durchmesser und eine konstante Kreisfläche als Querschnittsfläche aufweist. Das Durchgangsloch 6 weist ein Innengewinde 8 auf, das sich, im Unterschied zum Durchgangsloch 6, nicht bis zum vorderen Ende 4 erstreckt beziehungsweise nicht durchgeht, sondern vor dem vorderen Ende 4 des Spreizankers 1 ausläuft. Ein Auslauf des Innengewindes 8 ist mit der Bezugszahl 9 bezeichnet. Das Durchgangsloch 6 weist einen Innendurchmesser des Innengewindes 8 als Durchmesser auf, es kann als Kernloch des Innengewindes 8 aufgefasst werden.

Im Anschluss an die Aufweitung 3 außen am Spreizanker 1 ist ein Spreizring 10 axial verschieblich auf dem Kragen 2 angeordnet, der den Kragen 2 umschließt. Der Spreizring 10 kann allgemein auch als Spreizelement 11 aufgefasst werden. Der Spreizring 10 weist einen in einer Radialebene umlaufenden Kreisring 12 auf, von dem mit ihm einstückige Laschen 13 in Richtung der Aufweitung 3 des Spreizankers 1 abstehen. Diese Ausgestaltung des Spreizrings 10 ist nicht zwingend für die Erfindung. Anstelle des Spreizrings 10 sind andere Spreizelemente möglich, beispielsweise eine nicht-geschlitzte Spreizhülse (nicht dargestellt).

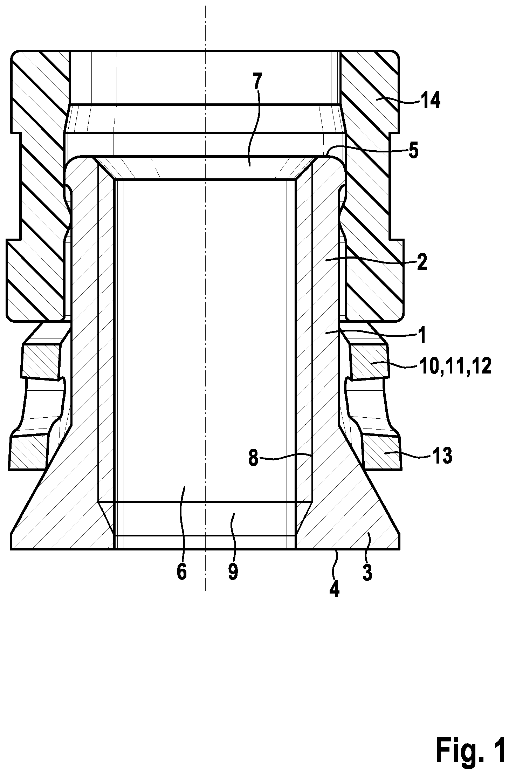

Auf einer der Aufweitung 3 des Spreizankers 1 abgewandten Seite des Spreizrings 10 ist eine Schiebehülse 14 axial verschieblich auf dem Kragen 2 des Spreizankers 1 angeordnet. Wenn der Spreizring 10 nicht aufgespreizt ist, steht die Schiebehülse 14 axial über das hintere Ende 5 des Spreizankers 1 über, wie es in Figur 1 zu sehen ist.

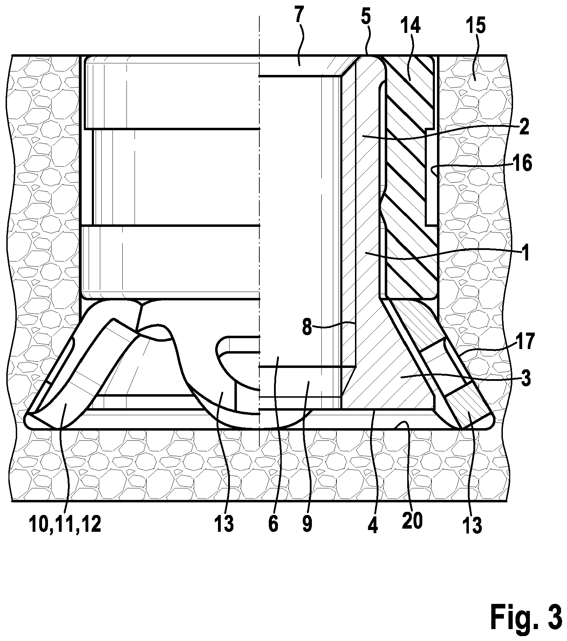

Zu einer Verankerung in einer Platte 15, beispielsweise einer Fassadenplatte aus Stein, wird der Spreizanker 1 in ein zylindrisches Sackloch 16 in der Platte 15 eingebracht, das eine konische Aufweitung als Hinterschneidung 17 an einem Grund des Sacklochs 16 aufweist. Das Sackloch 16 mit der Hinterschneidung 17 kann auch als Ankerloch aufgefasst werden. In einer Einbringrichtung des Spreizankers 1 in das Sackloch 16 befinden sich die Aufweitung 3 und das vordere Ende 4 vorn. Mit der Schiebehülse 14 wird der Spreizring 10 auf die Aufweitung 3 des Spreizankers 1 geschoben. Dabei drückt die Aufweitung 3 die Laschen 13 des Spreizrings 10 nach außen in einen Hintergriff in der Hinterschneidung 17 des Sacklochs 16, wie es in Figur 3 zu sehen ist. Über die Laschen 13 des Spreizrings 10 hintergreift der Spreizanker 1 die Hinterschneidung 17 des Sacklochs 16 und ist auf diese Weise durch Formschluss in der Platte 15 gehalten, was auch als Verankerung des Spreizankers 1 in der Platte 15 bezeichnet werden kann. Das Auseinanderdrücken der Laschen 13 kann auch als Aufspreizen des Spreizrings 10 bzw. des Spreizankers 1 aufgefasst werden.

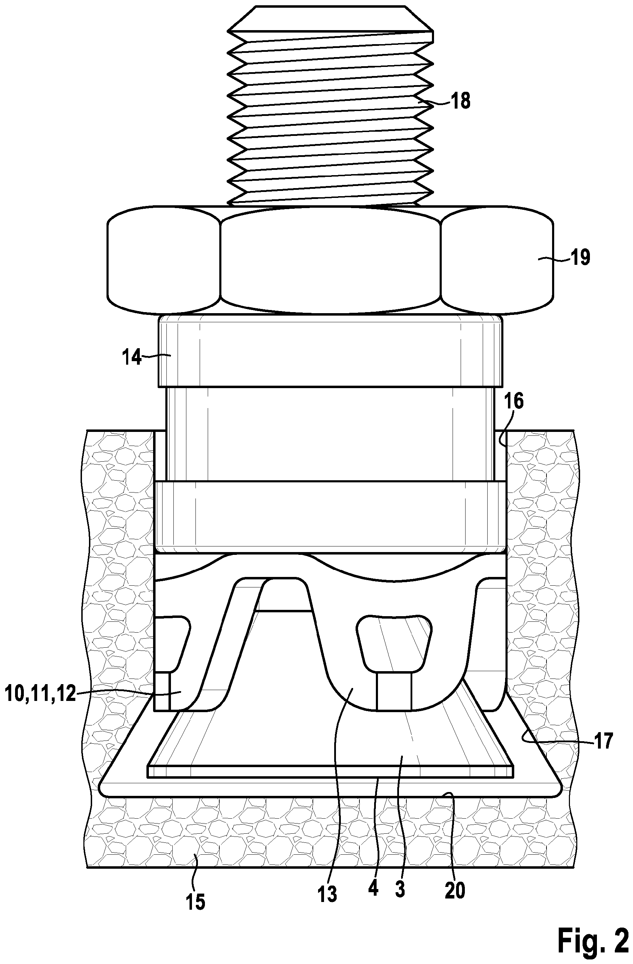

Zum Verschieben der Schiebehülse 14 auf dem Spreizanker 1 und Aufschieben des Spreizrings 10 auf die Aufweitung 3 kann, wie in Figur 2, gezeigt eine Gewindestange 18 in das Innengewinde 8 des Spreizankers 1 geschraubt und mittels einer auf die Gewindestange 18 geschraubten Mutter 19 die Schiebehülse 14 verschoben werden. Das nicht durchgehende, sondern vor dem vorderen Ende 4 des Spreizankers 1 endende Innengewinde 8 verhindert, dass die Gewindestange 18 durch den Spreizanker 1 durchgeschraubt wird und am vorderen Ende 4 austritt. Dadurch wird verhindert, dass die Gewindestange 18 gegen einen Grund 20 des Sacklochs 16 stößt. Dadurch wird in einer dünnen Platte 15 verhindert, dass die Gewindestange 18 die Platte 15 am Grund 20 des Sacklochs 16 durchstößt. Der Spreizanker 1 ist mit dem aufgespreizten Spreizring 10, wie in Figur 3, zu sehen in der Platte 15 verankert, so dass die Platte 15 mit der oder einer anderen in das Innengewinde 8 des Spreizankers 1 geschraubten Gewindestange 18, einer nicht dargestellten Schraube oder einem sonstigen Gewindeelement an beispielsweise einer Gebäudewand befestigbar ist. Das nicht durchgehende, sondern vor dem vorderen Ende 4 des Spreizankers 1 auslaufende Innengewinde 8 verhindert, dass solche in das Innengewinde 8 geschraubte Gewindeelemente am vorderen Ende 4 aus dem Spreizanker 1 austreten und die Platte 15 am Grund 20 des Sacklochs 16 beschädigen.

### Bezuqszeichenliste

### Spreizanker für dünne Platten

- 1: Spreizanker
- 2: Kragen
- 3: Aufweitung
- 4: vorderes Ende
- 5: hinteres Ende
- 6: Durchgangsloch
- 7: Fase
- 8: Innengewinde
- 9: Auslauf des Innengewindes 8
- 10: Spreizring
- 11: Spreizelement
- 12: Kreisring
- 13: Lasche
- 14: Schiebehülse
- 15: Platte
- 16: Sackloch
- 17: Hinterschneidung
- 18: Gewindestange
- 19: Mutter
- 20: Grund

## Patentansprüche

1. Spreizanker zum Verankern in einem hinterschnittenen Sackloch (16), insbesondere zum Verankern in einer dünnen Platte (15), wobei der Spreizanker (1) ein Durchgangsloch (6) mit einem Innengewinde (8) aufweist, wobei das Durchgangsloch (6) den Spreizanker in einer Längsrichtung vollständig bis zu einem vorderen Ende (4) durchdringt, wobei der Spreizanker (1) an seinem vorderen Ende eine Aufweitung (3) aufweist, in der sich der Spreizanker (1) zumindest abschnittsweise radial aufweitet, wobei der Spreizanker (1) ein Spreizelement (11) aufweist, das durch Aufschieben auf die Aufweitung (3) aufspreizbar ist, und wobei das Spreizelement (11) ungeschlitzt ist, **dadurch gekennzeichnet, dass** sich das Innengewinde (8) nicht bis zu einem vorderen Ende (4) des Durchgangslochs (6) erstreckt, sondern ein gewindefreier Abschnitt zwischen dem vorderen Ende (4) und dem Innengewinde (8) ausgebildet ist, mit einem Durchmesser des Durchgangslochs (6), der so groß wie ein Innendurchmesser des Innengewindes (8) ist.

2. Spreizanker nach Anspruch 1 **dadurch gekennzeichnet, dass** der Spreizanker (1) im Bereich der Aufweitung (3) ungeschlitzt ist.

## Claims

1. Expansible anchor for anchoring in an undercut blind hole (16), especially for anchoring in a thin panel (15), wherein the expansible anchor (1) has a through-hole (6) having an internal thread (8), wherein the through-hole (6) passes all the way through the expansible anchor in a longitudinal direction to a front end (4), wherein the expansible anchor (1) has at its front end a widened portion (3) in which the expansible anchor (1), at least in some portions, widens radially, wherein the expansible anchor (1) has an expansion element (11) which is expansible by being pushed onto the widened portion (3), and wherein the expansion element (11) is unslotted, **characterised in that** the internal thread (8) does not extend as far as a front end (4) of the through-hole (6), but instead a thread-free portion is provided between the front end (4) and the internal thread (8), with a diameter of the through-hole (6) which is the same size as an internal diameter of the internal thread (8).

2. Expansible anchor according to claim 1, **characterised in that** the expansible anchor (1) is unslotted in the region of the widened portion (3).

## Revendications

1. Pièce d'ancrage expansible dévolue à l'ancrage dans un trou borgne (16) contre-dépouillé, notamment à l'ancrage dans une plaque mince (15), ladite pièce d'ancrage expansible (1) présentant un trou traversant (6) muni d'un filetage intérieur (8), lequel trou traversant (6) parcourt l'intégralité de ladite pièce d'ancrage expansible, dans une direction longitudinale, jusqu'à une extrémité antérieure (4), la pièce d'ancrage expansible (1) comportant, à son extrémité antérieure, un évasement (3) dans lequel ladite pièce d'ancrage expansible (1) s'évase dans le sens radial, au moins par zones, ladite pièce d'ancrage expansible (1) étant dotée d'un élément déployable (11) pouvant être déployé par enfilement sur l'évasement (3), lequel élément déployable (11) est dépourvu de fente, **caractérisée par le fait que** le filetage intérieur (8) ne s'étend pas jusqu'à une extrémité antérieure (4) du trou traversant (6), un tronçon non fileté étant en revanche ménagé entre ladite extrémité antérieure (4) et ledit filetage intérieur (8), ledit trou traversant (6) présentant un diamètre de même dimensionnement qu'un diamètre interne dudit filetage intérieur (8).

2. Pièce d'ancrage expansible selon la revendication 1, **caractérisée par le fait que** ladite pièce d'ancrage expansible (1) est dépourvue de fente dans la région de l'évasement (3).
